# EUROPEAN PATENT SPECIFICATION

(11) **EP 4 307 107 B1**
(45) Date of publication and mention of the grant of the patent: **11.11.2026**
(21) Application number: 23185039.7
(22) Date of filing: 12.07.2023
(51) Int. Cl.: G06F 9/46, G06F 8/38, G06F 9/34

(54) **SYSTEM AND METHOD FOR SIMULATION AND DEPLOYMENT OF CUSTOMIZED USER INTERFACE (UI) FOR POWER SYSTEM CONTROLLER DEVICE**
SYSTEM UND VERFAHREN ZUR SIMULATION UND ANWENDUNG EINER BENUTZERSPEZIFISCHEN BENUTZERSCHNITTSTELLE FÜR EINE STROMSYSTEMSTEUERUNGSVORRICHTUNG
SYSTÈME ET PROCÉDÉ DE SIMULATION ET DE DÉPLOIEMENT D'UNE INTERFACE UTILISATEUR PERSONNALISÉE (UI) POUR DISPOSITIF DE COMMANDE DE SYSTÈME D'ALIMENTATION

(30) Priority: 12.07.2022 IN 202211039972; 28.06.2023 US 202318215521
(43) Date of publication of application: 17.01.2024
(73) Proprietor: Vertiv Corporation, Westerville, OH 43082 (US)
(72) Inventor: SHARMA, Putli, Maharashtra (IN); JAMBHEKAR, Anup, Pune (IN)
(74) Representative: Kilburn & Strode LLP

(56) References cited:
- WO-A1-2020/055814
- US-A1- 2015 020 006

## Description

### TECHNICAL FIELD

The present invention is directed to systems and methods for power control and, more particularly, to user interfaces (UI) for power control devices.

### BACKGROUND

International patent application WO 2020/055814 A1 discloses systems, methods, and computer readable media for modifying or updating a user interface. In some examples, systems, methods, and computer readable media include receiving, via an operator console on an operator system, one or more inputs for a template for a user interface, generating, based on the one or more inputs, the template for the user interface, and generating, based on the template, a plurality of designs for the user interface, wherein each design in the plurality of designs is associated with an interface profile.

United States parent application US 2015/020006 A1 discloses a system for creating, editing, maintaining and using interactive UI on a plurality of different types of mobile devices. The system allows intuitive, fast and virtually error-free development of interactive UI by semi-automatically creating and integrating codes based on examples designed by a UI designer. The system provides menu-driven development of the sample code and menu-driven tools for integrating the sample code such that editing and modifying the sample code is minimized. The system is capable of creating applications to be loaded on the end-users' mobile device that enable using the UI, and allows browsing the UI from end-users' mobile device.

Efficient and seamless data center operations depend on managing a variety of critical factors, a failure in any one of which may lead to service disruption or worse, e.g., power supply and distribution, backup power systems, thermal management, and/or surge protection. For example, data center architecture may include controllers for monitoring any or all of: distribution of alternating-current (AC) power supplies; rectifiers converting AC supply voltages into stable direct-current (DC) voltages; solar converters for supplementing grid-based power supplies; insulation and cooling systems; and backup batteries. Device and system monitors may be incorporated into controller devices physically incorporated into cabinets at the data center, or may be accessed remotely via applications downloadable to mobile devices.

Successful monitoring of a variety of critical factors underpinning data center operations depends on the controller user interfaces (UI) being understandable by, and compatible with, end users. Conventional controller systems may not allow an end user to interact with the final UI in advance, requiring multiple iterations of reviews and changes before the UI is accepted. Similarly, controller Uls are not generally customizable by an end user based on specific user needs or priorities.

### SUMMARY

The present invention is defined according to the independent claims. Specific embodiments are defined in the dependent claims.

The invention provides an improved and move flexible user input interface, UI. The thus obtained UI can be used to control the power controller device, or any other device having an applicable UI, flexibly. Potentially, all, or at least to a large degree, most of the device features can be used within the UI of the device. By providing a simulation of the UI through a web-interface which allows real-time simulation of a configurable instance of the UI, control of the device can be performed in a more flexible and improved manner, once being approved, downloaded and used by the end user for actual control of the device.

With the proposed method, the device can thus be controlled in an improved and more efficient manner, but also in a more user-friendly manner as it can be customized according to the user's needs and capabilities. Moreover, the safety of such a device may be improved as well, hence, a safer device is obtained if its UI is customized by the proposed method, as the information presented through the UI may relate to safety type notifications and actions, which notifications and actions may be interfaced towards the user of the device in a more efficient and therefore safer manner.

In some embodiments, the method includes storing the simulated UI layout to cloud-based storage accessible to the end user.

In some embodiments, the method includes generating the UI build as a containerized application.

In some embodiments, the method includes providing the generated UI build for download by the end user via a mobile computing/communications device wirelessly linked to the power controller device.

In some embodiments, the method includes receiving at least one customization of the displayed simulated UI layout from the end user via the cloud-based web application. The method includes revising the simulated UI layout based on the customization received from the end user.

In some embodiments, the method includes receiving via the cloud-based web application an end-user request to rearrange the device features displayed by the simulated UI layout.

In some embodiments, the method includes receiving from the end user via the cloud-based web application branding elements for incorporation into the simulated UI layout.

According to a further aspect, the invention provides a system for simulating a customizable user interface (UI) for a power controller device. The system includes a cloud-based web interface via which an end user may select a specific device, an operating region, and device features to be incorporated into a user interface (UI) for a controller device or mobile application wirelessly connected to said controller device. Based on the selected device type, regional configuration, and device features, a simulated UI is provided to the end user incorporating simulated data in one or more of a variety of desired data display formats. The end user may visualize the simulated UI via the web interface and customize the UI by reconfiguring layout features and/or adding branding elements. The system further provides a build of the finished UI downloadable by the end user to, and compatible with, the selected target device.

In some embodiments, the system generates a build of the simulated UI layout configured for execution on the selected power controller device. The generated build may be provided for download to the power controller device by the end user via the cloud-based web application.

In some embodiments, the system generates the simulated UI layout build as a containerized application.

In some embodiments, the power controller device is a power supply controller.

In some embodiments, the power control device is a power converter controller.

In some embodiments, the power control device is a power rectifier controller.

In some embodiments, the power control device is a thermal monitoring controller.

In some embodiments, the system provides the generated UI build for download by the end user via a mobile computing/communications device wirelessly linked to the power controller device.

In some embodiments, the system receives from the end user a layout customization based on which the simulated UI layout is revised.

In some embodiments, the layout customization includes one or more of 1) an end-user request to rearrange the device features displayed by the simulated UI layout.

In some embodiments, the layout customization includes branding elements for incorporation into the simulated UI layout.

It is to be understood that both the scope of protection is limited only by the appended claims and that the foregoing general description and the following detailed description are exemplary and explanatory only and are not necessarily restrictive of the present invention. The accompanying drawings, which are incorporated in and constitute a part of the specification, illustrate subject matter of the invention. Together, the descriptions and the drawings serve to explain the principles of the invention.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present invention are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a block diagram of a system architecture for simulating a customizable user interface (UI) for a power controller device according to the present invention;
FIG. 2 is a diagrammatic illustration visualizing a simulation operation of the system of FIG. 1 according to the present invention;
FIG. 3A is an illustration of a user interface for creating a simulated customized UI via the system of FIG. 1;
FIG. 3B is an illustration of a user interface for building a simulated customized UI via the system of FIG. 1;
FIG. 4 is an illustration of a simulated customized user interface (UI) generated by the system of FIG. 1 according to the present invention;
and FIGS. 5A through 5D are process flow diagrams illustrating a method for simulating a customized UI for a power system controller device.

### DETAILED DESCRIPTION

Before explaining one or more embodiments of the invention in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the invention. However, it will be apparent to one of ordinary skill in the art having the benefit of the instant invention that the embodiments disclosed herein may be practiced without some of these specific details. In other instances, well-known features may not be described in detail to avoid unnecessarily complicating the instant invention.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the invention in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant invention.

Broadly speaking, embodiments of the invention herein are directed to a system and method for simulating a customizable user interface (UI) for a power control device via cloud-based web application. For example, an end user may select compatible standard features based on their unique requirements. The cloud-based web application simulates a standard UI based on the selected features, which the user may further customize and save to the cloud. A revised simulated UI can be converted into a downloadable build usable by the actual device. By showing the end user a simulated UI tailored to their needs in near real time, cycle time in finalizing UI requirements may be significantly reduced.

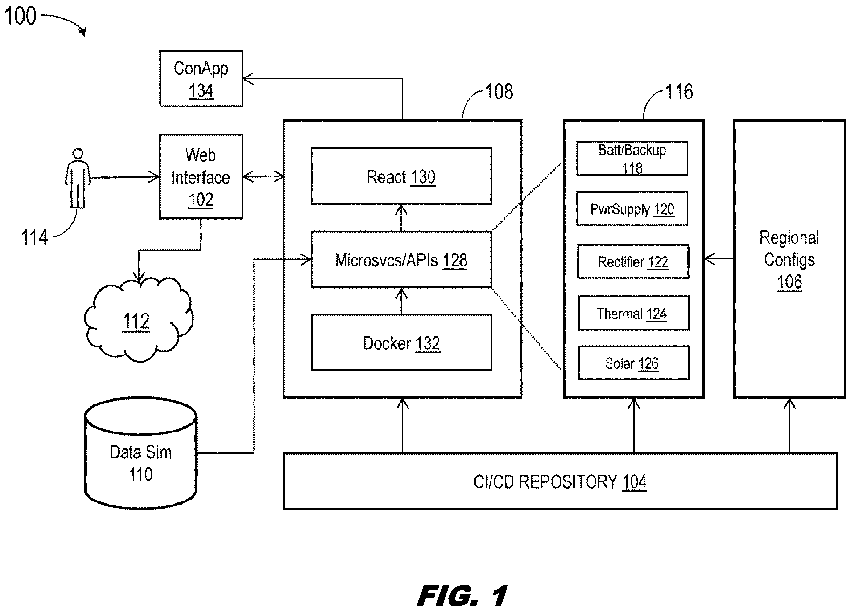

Referring to FIG. 1, a system 100 for simulating a customizable user interface (UI) for an end user power controller device is shown. The system 100 may include web interface 102, continuous integration/continuous delivery (CI/CD) repository 104 (e.g., CI/CD library), regional configurations 106, application templates 108, configuration data simulator 110, and cloud-based storage 112.

In the method, the system 100 provides an end user 114 with a web interface 102 via which the end user provides parameters for a simulated user interface (UI; e.g., graphic user interface (GUI)) for a desired power controller device (e.g., target device). The system 100 generates a simulated UI displayable to the end user 114 via the web interface 102. The end user 114 interacts with the simulated UI and customize layout elements, saving the revised simulated UI to cloud-based storage 112. When the end user 114 revises the layout of the simulated UI to their satisfaction, the system 100 generates a dummy build of the simulated UI downloadable by the end user and compatible with the actual target device. The web interface 102 may be a cloud-based web application executable on a desktop or laptop computer, or a mobile computing or communications device. The mobile device is configured for running an application providing a wireless link to the target device, via which operational parameters specific to the target device can be observec and/or adjusted by the end user 114. Similarly, the dummy build may be downloaded to and installed on the mobile device for use by the end user 114.

In the method, the end user 114 provides the system 100 with a device type selection 116 and a regional designation via the web interface 102. For example, the device type selection 116 may identify, generally or specifically, the type of controller device the end user 114 wishes to simulate. For example, device type selections 116 may include battery/backup power controller devices 118, and includes power supply controller devices 120, power rectifier controller devices 122, and/or thermal controller devices 124 (e.g., for insulation management and/or coolant pump management); and/or solar converter controller devices 126. Regional configurations 106 based on regional designations may apply specific regional constraints based on the country, continent, or region in which the target device operates, e.g., Europe/Middle East/Africa (EMEA); North America (NA); Asia/Pacific (APAC).

In embodiments, the end user 114 may further select, via the web interface 102, specific device features to be incorporated by the system 100 into the simulated UI. For example, the end user 114 may wish to monitor, via the simulated UI, specific aspects of the target device, e.g., event logs, operational setpoints, sensor data, and/or graphic representations of the target device or device components monitored by a like controller (e.g., backup batteries, coolant pumps). In embodiments, the system 100 may retrieve (e.g., from the CI/CD repository 104) application templates 108 based on the specific device type selection 116 and any device features selected. For example, application templates 108 may incorporate microservice/API-based structures 128 separating customizable UI layer/s from the underlying business logic. In some embodiments, application templates 108 may further incorporate, e.g., React (130) or other like JavaScript libraries; and/or Docker (132) or other like container orchestration platforms, e.g., for generation of simulated UI builds as containerized applications 134 (e.g., for Kubernetes).

In embodiments, based on the selected device type 116 and selected device features, and any applicable regional constraints based on regional configurations 106, the system 100 may generate a simulated UI based on the configuration data simulator 110 compatible with a variety of desired display data formats. For example, the applicable device type selection 116 and/or application templates 108 may be compatible with one or more specific display data formats, e.g., extended markup language (XML); HTML/ART templates; and/or JavaScript Object Notation (JSON). The configuration data simulator 110 may incorporate various configuration data libraries and platforms (e.g., Redis, MongoDB) such that the generated simulated UI may confirm to the desired data display format/s.

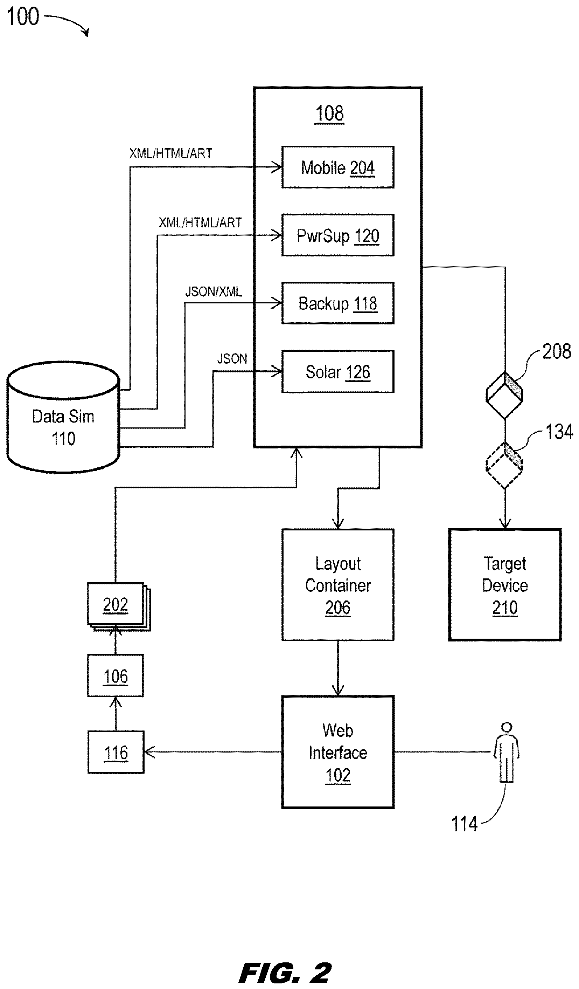

Referring to FIG. 2, the system 100 is shown.

In embodiments, the end user 114 may select, via the web interface 102, a device type 116, a regional configuration 106, and device features 202. For example, based on selections by the end user 114 and the applicable regional configurations 106, the system 100 may generate application templates 108 compatible with the selected device type 116 (e.g., battery/backup power controller devices 118, power supply controller devices 120, power rectifier controller devices (122, FIG. 1), thermal controller devices (124, FIG. 1), solar converter controller devices 126, or mobile devices 204) and for interacting with the selected device features 202. The configuration data simulator 110 may provide UI compatibility with the display data format desired by the end user 114, e.g., JSON, XML, HTML/ART, and/or combinations thereof.

In embodiments, the simulated UI may be provided (e.g., via layout container 206) for viewing and/or customization by the end user 114 via the web interface 102 (e.g., desktop, laptop, mobile). Similarly, when the simulated UI has been customized to the satisfaction of the end user 114 (and, e.g., saved to cloud-based storage (112, FIG. 1)), the system 100 may generate a build 208 of the simulated UI (which may be, or may include, a containerized application 134) downloadable by the end user 114 to the target device 210.

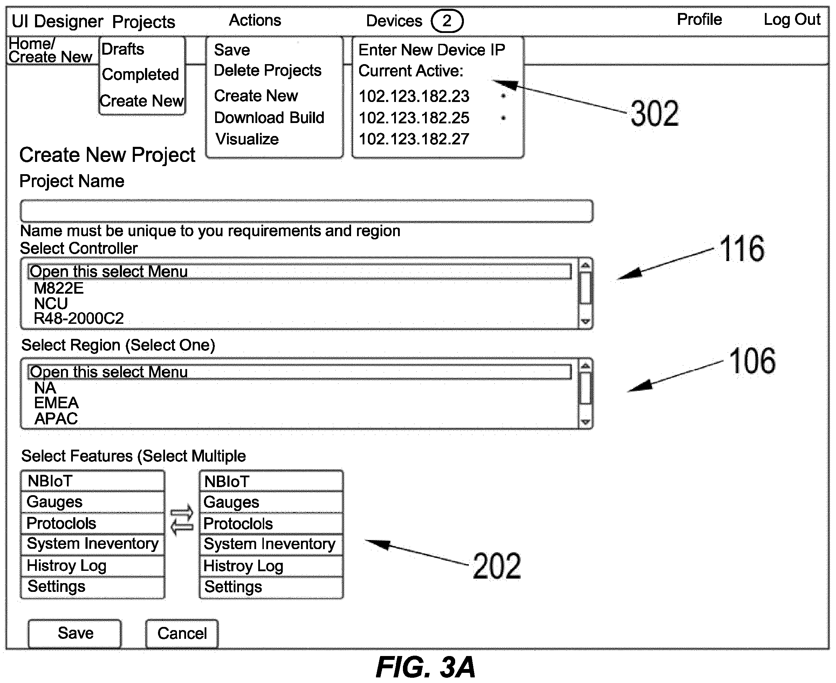

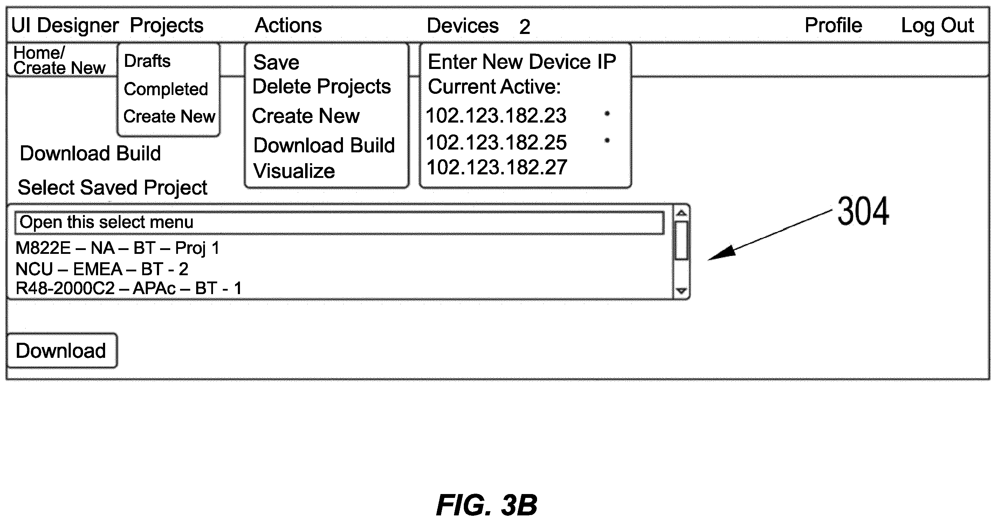

Referring to FIGS. 3A and 3B, the web interface 102 is shown.

In embodiments, referring to FIG. 3A, the web interface 102 may allow the end user (114, FIG. 2) to select a device type 116 and a regional configuration 106. For example, when the device type 116 and regional configuration 106 are selected, the web interface 102 may provide the end user 114 with a menu of available device features 202 selectable by the end user. In some embodiments, the end user 114 may enter a new target device (210, FIG. 2) (e.g., associate a new target device with the end user) via its IP address (302) and associate attributes to the new target device, e.g., device type 116, regional configuration 106, device features 202. For example, once the target device 210 is entered, the end user 114 may select the new target device (210, FIG. 2) and any simulated UI associated with that target device, via the IP address 302.

When the end user 114 has selected device features 202 for incorporation into the simulated UI, the end user may save the simulated UI to cloud-based storage (112, FIG. 1), visualize the simulated UI via the web interface 102, or download a build (208, FIG. 2) of the simulated UI for execution on the target device (210, FIG. 2).

Referring also to FIG. 3B, the web interface 102 may allow the end user 114 to select a saved simulated UI (304) and download a build (208, FIG. 2) corresponding to the selected UI for installation and/or execution on the target device (210, FIG. 2).

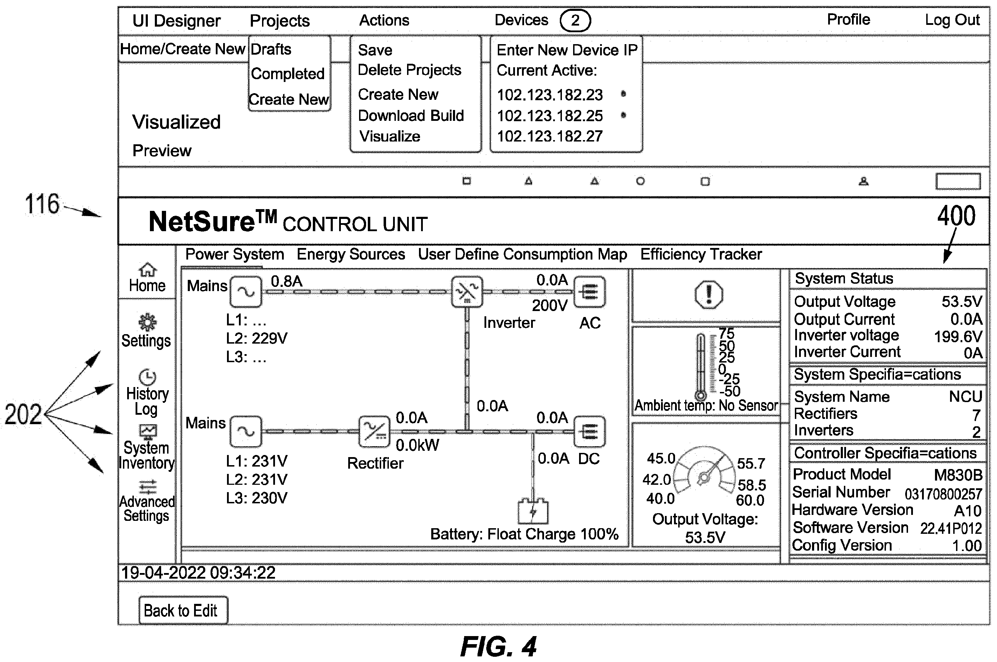

Referring now to FIG. 4, the web interface 102 is shown.

In embodiments, the web interface 102 may allow the end user 114 to visualize (400) a generated or selected simulated UI. For example, the visualized simulated UI 400 may be tailored to the specific device type 116, regional configuration 106, and device features 202 selected by the end user. In embodiments, the web interface 102 may further allow the end user to customize the visualized simulated UI 400, e.g., by reconfiguration of device features 202 and/or addition of customized branding elements.

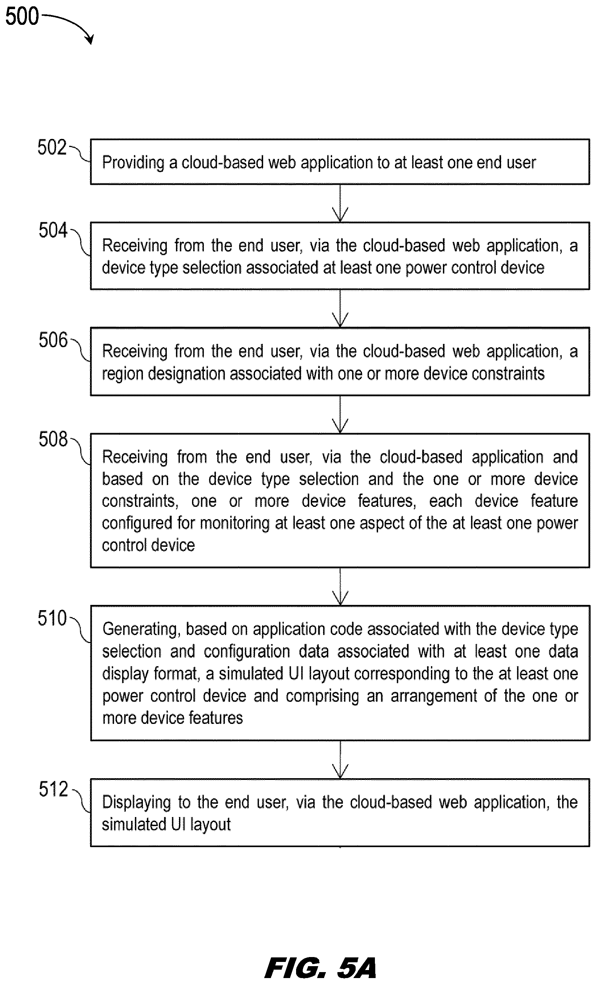

Referring now to FIG. 5A, a method 500 for simulating a customizable user interface (UI) for a power controller device may be implemented by the system 100 and may include the following steps.

At a step 502, a cloud-based web application is provided to an end user (e.g., via a web interface) for selection and customization of a UI for a target device. For example, the web interface may be accessed via a desktop/laptop computer or a mobile device.

At a step 504, the system receives a device type selection from the end user via the cloud-based web application, the at least one target device including at least one of a power supply controller, a power converter controller, a power rectifier controller, or a thermal monitoring controller. For example, the end user may select as a target device a power supply controller, backup battery controller, power rectifier controller, thermal management controller, solar converter controller, or mobile device wirelessly linked to a controller and capable of monitoring said controller via mobile application.

At a step 506, the system receives, via the cloud-based web application and from the end user, a region designation associated with regional constraints (e.g., based on the country or global region of operation).

At a step 508, the system receives, via the cloud-based web application and from the end user, a selection of one or more specific device features to be monitored by the simulated UI.

At a step 510, the system generates, based on application templates associated with the selected device type, device features, and regional constraints, and simulated configuration data associated with one or more desired data display formats, a simulated UI layout compatible with the selected target device and incorporating an arrangement of the selected device features, one or more operational parameters of the at least one target device observable and adjustable by the end user via the simulated UI layout.

At a step 512, the system displays the simulated UI layout to the end user via the cloud-based web application.

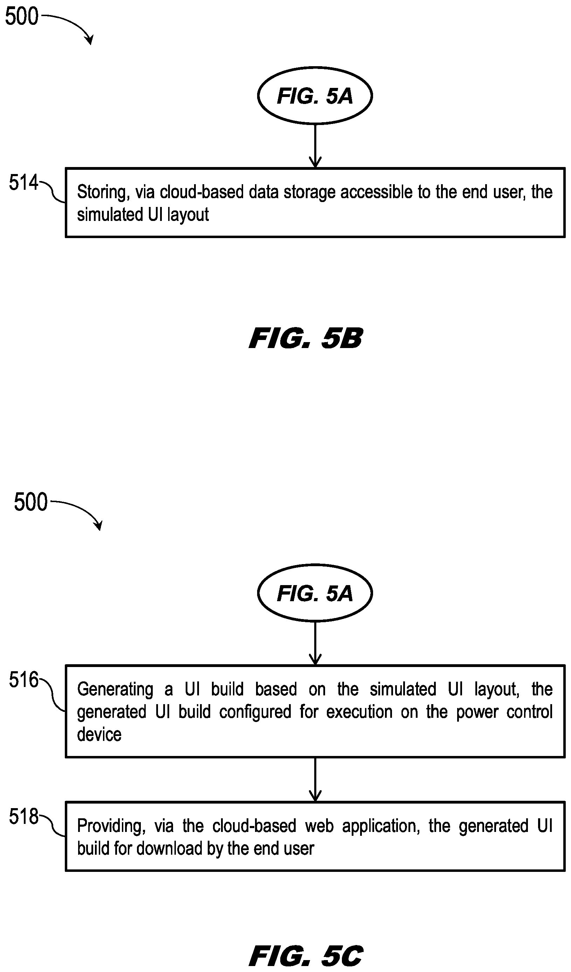

Referring now to FIG. 5B, the method 500 may include an additional step 514. At the step 514, the system stores the revised simulated UI layout to cloud-based storage.

Referring also to FIG. 5C, the method 500 may include additional steps 516 and 518. At the step 516, the system generates a UI build based on the revised simulated UI layout, the generated build downloadable to and compatible with the selected target device.

. At the step 518, the system provides the generated UI build for download to the target device by the end user.

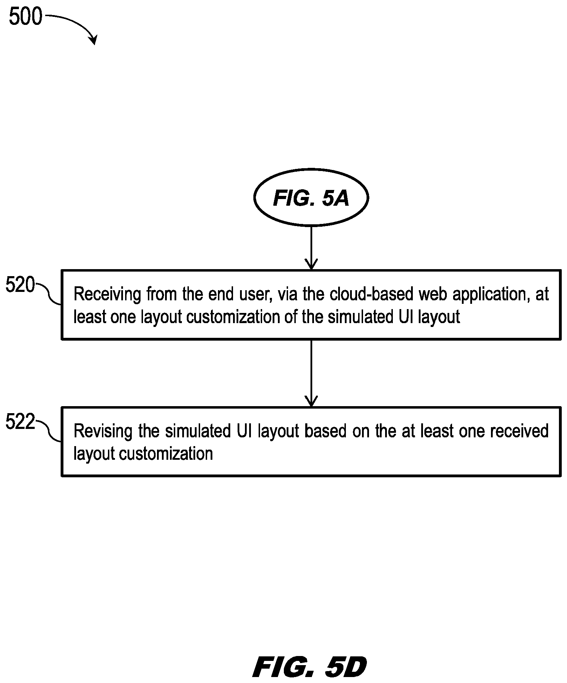

Referring also to FIG. 5D, the method 500 may include the additional steps 520 and 522. At the step 520, the system receives from the end user, via the cloud-based web application, layout changes or customizations to the simulated UI layout.

At the step 522, the system revises the simulated UI layout based on the received layout changes or customizations from the end user.

### CONCLUSION

It is contemplated that the system may have numerous advantages. For example, the system provides the end user with the ability to customize the user interface, as well as a final view of the user interface incorporating the desired data, in near real time. Similarly, the system will significantly reduce cycle time in incorporating and finalizing end user requirements and desired features.

Those having skill in the art will recognize that the state of the art has progressed to the point where there is little distinction left between hardware and software implementations of aspects of systems; the use of hardware or software is generally (but not always, in that in certain contexts the choice between hardware and software can become significant) a design choice representing cost vs. efficiency tradeoffs. Those having skill in the art will appreciate that there are various vehicles by which processes and/or systems and/or other technologies described herein can be implemented (e.g., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; alternatively, if flexibility is paramount, the implementer may opt for a mainly software implementation; or, yet again alternatively, the implementer may opt for some combination of hardware, software, and/or firmware. Hence, there are several possible vehicles by which the processes and/or devices and/or other technologies described herein may be implemented, none of which is inherently superior to the other in that any vehicle to be utilized is a choice dependent upon the context in which the vehicle will be deployed and the specific concerns (e.g., speed, flexibility, or predictability) of the implementer, any of which may vary. Those skilled in the art will recognize that optical aspects of implementations will typically employ optically-oriented hardware, software, and or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and/or firmware would be well within the skill of one of skill in the art in light of the present invention. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link, etc.).

In a general sense, those skilled in the art will recognize that the various aspects described herein which can be implemented, individually and/or collectively, by a wide range of hardware, software, firmware, or any combination thereof can be viewed as being composed of various types of "electrical circuitry." Consequently, as used herein "electrical circuitry" includes, but is not limited to, electrical circuitry having at least one discrete electrical circuit, electrical circuitry having at least one integrated circuit, electrical circuitry having at least one application specific integrated circuit, electrical circuitry forming a general purpose computing device configured by a computer program (e.g., a general purpose computer configured by a computer program which at least partially carries out processes and/or devices described herein, or a microprocessor configured by a computer program which at least partially carries out processes and/or devices described herein), electrical circuitry forming a memory device (e.g., forms of random access memory), and/or electrical circuitry forming a communications device (e.g., a modem, communications switch, or optical-electrical equipment). Those having skill in the art will recognize that the subject matter described herein may be implemented in an analog or digital fashion or some combination thereof.

Those having skill in the art will recognize that it is common within the art to describe devices and/or processes in the fashion set forth herein, and thereafter use engineering practices to integrate such described devices and/or processes into data processing systems. That is, at least a portion of the devices and/or processes described herein can be integrated into a data processing system via a reasonable amount of experimentation. Those having skill in the art will recognize that a typical data processing system generally includes one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity; control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

While particular aspects of the present invention described herein have been shown and described, it will be apparent to those skilled in the art that, based upon the teachings herein, changes and modifications may be made without departing from the scope defined by the appended claims.

## Claims

1. A method (500) for simulating a customizable user interface (UI) for a power control device, the method comprising:
providing (502) a cloud-based web application to at least one end user;
receiving (504) from the end user, via the cloud-based web application, a device type selection associated with at least one target device of a plurality of power control devices, the at least one target device including at least one of a power supply controller, a power converter controller, a power rectifier controller, or a thermal monitoring controller;
receiving (506) from the end user, via the cloud-based web application, a region designation associated with one or more device constraints;
receiving (508) from the end user, via the cloud-based application and based on the device type selection and the one or more device constraints, one or more device features, each device feature configured for monitoring at least one aspect of the at least one target device;
generating (510), based on application code associated with the device type selection and configuration data associated with at least one data display format, a simulated user interface, UI, layout corresponding to the at least one target device and comprising an arrangement of the one or more device features, and one or more operational parameters of the at least one target device which are observable and adjustable by the end user via the simulated UI layout;
displaying (512) to the end user, via the cloud-based web application, the simulated UI layout;
generating (516) a UI build based on the simulated UI layout, the generated UI build configured for execution on the target device; and
providing (518), via the cloud-based web application, the generated UI build for download by the end user.

2. The method of Claim 1, further comprising:
storing (514), via cloud-based data storage accessible to the end user, the simulated UI layout.

3. The method of Claims 1 or 2, wherein generating a UI build based on the simulated UI layout includes:
generating at least one containerized application based on the simulated UI layout.

4. The method of any of the preceding claims, wherein providing, via the cloud-based web application, the generated UI build for download by the end user includes:
providing the generated UI build for download by the end user to at least one mobile communications device in wireless communication with the at least one target device.

5. The method of any of the preceding claims, further comprising:
receiving (520) from the end user, via the cloud-based web application, at least one layout customization of the simulated UI layout;
and
revising (522) the simulated UI layout based on the at least one received layout customization.

6. The method of Claim 5, wherein receiving from the end user, via the cloud-based web application, at least one layout customization of the simulated UI layout includes:
receiving at least one request to rearrange the arrangement of the one or more device features, and/or
receiving from the end user at least one branding element for incorporation into the simulated UI layout.

7. A system (100) for simulating a customizable user interface, UI, for a power control device, the system comprising:
one or more memory elements (104) configured for storing:
one or more regional configurations (106);
one or more application templates (108) associated with a plurality of power control devices;
one or more regional constraints associated with the plurality of power control devices;
and
configuration data (110) associated with one or more data display formats;
one or more processors;
and
at least one cloud-based web application executable by the one or more processors, the at least one cloud-based web application configured to:
receive, from an end user:
a device type selection (116) corresponding to a target device (210) of the plurality of power control devices, the target device including at least one of a power supply controller (120), a power converter controller (126), a power rectifier controller (122), or a thermal monitoring controller (124);
a region designation associated with the target device;
and
one or more selected device features (202) based on the device type selection and the region designation, each selected device feature configured for monitoring at least one aspect of the target device;
generate, based on at least one application template and configuration data corresponding to the device type selection, a simulated user interface, UI, layout (400) comprising an arrangement of the one or more selected device features, and one or more operational parameters of the target device which are observable and adjustable by the end user via the simulated UI layout;
display the simulated UI layout to the end user;
receive from the end user at least one layout customization of the simulated UI layout;
and
revise the simulated UI layout based on the at least one layout customization,
wherein the at least one cloud-based web application is configured to:
generate a UI build (208) based on the simulated UI layout, the generated UI build configured for execution on the target device; and
provide, via the cloud-based web application, the generated UI build for download by the end user.

8. The system of Claim 7, wherein the at least one cloud-based web application is configured to store the simulated UI layout (304) to cloud-based storage (112) accessible to the end user.

9. The system of any of the preceding claims, wherein the generated UI build includes at least one containerized application (134) based on the simulated UI layout.

10. The system of Claim 7, wherein the at least one cloud-based web application is accessible to the end user, and wherein the generated UI build is downloadable and executable by the end user, via at least one mobile communications device (204) in wireless communication with the at least one target device.

11. The system of Claim 7, wherein receiving the at least one layout customization of the simulated UI layout includes
at least one request to rearrange the arrangement of the one or more selected device features,
and/or
at least one branding element provided by the end user for incorporation by the cloud-based web application into the simulated UI layout.

## Patentansprüche

1. Verfahren (500) zum Simulieren einer anpassbaren Benutzerschnittstelle (UI) für eine Leistungssteuervorrichtung, wobei das Verfahren Folgendes umfasst:
Bereitstellen (502) einer cloudbasierten Webanwendung für mindestens einen Endbenutzer;
Empfangen (504), von dem Endbenutzer über die cloudbasierte Webanwendung, einer Vorrichtungstypauswahl, die mit mindestens einer Zielvorrichtung mehrerer Leistungssteuervorrichtungen assoziiert ist, wobei die mindestens eine Zielvorrichtung mindestens eine einer Leistungsversorgungssteuerung, einer Leistungswandlersteuerung, einer Leistungsgleichrichtersteuerung oder einer thermischen Überwachungssteuerung beinhaltet;
Empfangen (506), von dem Endbenutzer über die cloudbasierte Webanwendung, einer Regionsbezeichnung, die mit einer oder mehreren Vorrichtungsbeschränkungen assoziiert ist;
Empfangen (508), von dem Endbenutzer über die cloudbasierte Webanwendung und basierend auf der Vorrichtungstypauswahl und der einen oder den mehreren Vorrichtungsbeschränkungen, eines oder mehrerer Vorrichtungsmerkmale, wobei jedes Vorrichtungsmerkmal zum Überwachen mindestens eines Aspekts der mindestens einen Zielvorrichtung konfiguriert ist;
Erzeugen (510), basierend auf Anwendungscode, der mit der Vorrichtungstypauswahl und Konfigurationsdaten assoziiert ist, die mit mindestens einem Datenanzeigeformat assoziiert sind, eines simulierten Benutzerschnittstellen-, UI-, Layouts, das der mindestens einen Zielvorrichtung entspricht und eine Anordnung des einen oder der mehreren Vorrichtungsmerkmale umfasst, und eines oder mehrerer Betriebsparameter der mindestens einen Zielvorrichtung, die durch den Endbenutzer über das simulierte UI-Layout beobachtbar und einstellbar sind;
Anzeigen (512), für den Endbenutzer über die cloudbasierte Webanwendung, des simulierten UI-Layouts;
Erzeugen (516) eines UI-Build basierend auf dem simulierten UI-Layout, wobei der erzeugte UI-Build zur Ausführung auf der Zielvorrichtung konfiguriert ist; und
Bereitstellen (518), über die cloudbasierte Webanwendung, des erzeugten UI-Build zum Herunterladen durch den Endbenutzer.

2. Verfahren nach Anspruch 1, ferner umfassend:
Speichern (514), über einen cloudbasierten Datenspeicher, auf den der Endbenutzer zugreifen kann, des simulierten UI-Layouts.

3. Verfahren nach Anspruch 1 oder 2, wobei das Erzeugen eines UI-Build basierend auf dem simulierten UI-Layout Folgendes beinhaltet:
Erzeugen mindestens einer containerisierten Anwendung basierend auf dem simulierten UI-Layout.

4. Verfahren nach einem der vorhergehenden Ansprüche, wobei das Bereitstellen, über die cloudbasierte Webanwendung, des erzeugten UI-Build zum Herunterladen durch den Endbenutzer Folgendes beinhaltet:
Bereitstellen des erzeugten UI-Build zum Herunterladen durch den Endbenutzer an mindestens eine mobile Kommunikationsvorrichtung in drahtloser Kommunikation mit der mindestens einen Zielvorrichtung.

5. Verfahren nach einem der vorhergehenden Ansprüche, ferner umfassend:
Empfangen (520), von dem Endbenutzer über die cloudbasierte Webanwendung, mindestens einer Layout-Anpassung des simulierten UI-Layouts;
und
Überarbeiten (522) des simulierten UI-Layouts basierend auf der mindestens einen empfangenen Layout-Anpassung.

6. Verfahren nach Anspruch 5, wobei das Empfangen, von dem Endbenutzer über die cloudbasierte Webanwendung, mindestens einer Layout-Anpassung des simulierten UI-Layouts Folgendes beinhaltet:
Empfangen mindestens einer Anforderung zum Neuanordnen der Anordnung des einen oder der mehreren Vorrichtungsmerkmale, und/oder
Empfangen, von dem Endbenutzer, mindestens eines Branding-Elements zur Integration in das simulierte UI-Layout.

7. System (100) zum Simulieren einer anpassbaren Benutzerschnittstelle, UI, für eine Leistungssteuervorrichtung, wobei das System Folgendes umfasst:
ein oder mehrere Speicherelemente (104), die zum Speichern von Folgendem konfiguriert sind:
einer oder mehrerer regionaler Konfigurationen (106);
einer oder mehrerer Anwendungsvorlagen (108), die mit mehreren Leistungssteuervorrichtungen assoziiert sind;
einer oder mehrerer regionaler Einschränkungen, die mit den mehreren Leistungssteuervorrichtungen assoziiert sind;
und
Konfigurationsdaten (110), die mit einem oder mehreren Datenanzeigeformaten assoziiert sind;
einen oder mehrere Prozessoren;
und
mindestens eine cloudbasierte Webanwendung, die durch den einen oder die mehreren Prozessoren ausführbar ist, wobei die mindestens eine cloudbasierte Webanwendung zu Folgendem konfiguriert ist:
Empfangen, von einem Endbenutzer:
einer Vorrichtungstypauswahl (116), die einer Zielvorrichtung (210) der mehreren Leistungssteuervorrichtungen entspricht, wobei die Zielvorrichtung mindestens eine einer Leistungsversorgungssteuerung (120), einer Leistungswandlersteuerung (126), einer Leistungsgleichrichtersteuerung (122) oder einer thermischen Überwachungssteuerung (124) beinhaltet;
einer Regionsbezeichnung, die mit der Zielvorrichtung assoziiert ist;
und
eines oder mehrerer ausgewählter Vorrichtungsmerkmale (202) basierend auf der Vorrichtungstypauswahl und der Regionsbezeichnung, wobei jedes ausgewählte Vorrichtungsmerkmal zum Überwachen mindestens eines Aspekts der Zielvorrichtung konfiguriert ist;
Erzeugen, basierend auf mindestens einer Anwendungsvorlage und Konfigurationsdaten, die der Vorrichtungstypauswahl entsprechen, eines simulierten Benutzerschnittstellen-, UI-, Layouts (400), das eine Anordnung des einen oder der mehreren ausgewählten Vorrichtungsmerkmale umfasst, und eines oder mehrerer Betriebsparameter der Zielvorrichtung, die durch den Endbenutzer über das simulierte UI-Layout beobachtbar und einstellbar sind;
Anzeigen des simulierten UI-Layouts für den Endbenutzer; Empfangen, von dem Endbenutzer, mindestens einer Layout-Anpassung des simulierten UI-Layouts;
und
Überarbeiten des simulierten UI-Layouts basierend auf der mindestens einen Layout-Anpassung,
wobei die mindestens eine cloudbasierte Webanwendung zu Folgendem konfiguriert ist:
Erzeugen eines UI-Build (208) basierend auf dem simulierten UI-Layout, wobei der erzeugte UI-Build zur Ausführung auf der Zielvorrichtung konfiguriert ist; und
Bereitstellen, über die cloudbasierte Webanwendung, des erzeugten UI-Build zum Herunterladen durch den Endbenutzer.

8. System nach Anspruch 7, wobei die mindestens eine cloudbasierte Webanwendung dazu konfiguriert ist, das simulierte UI-Layout (304) in einem cloudbasierten Speicher (112) zu speichern, auf den der Endbenutzer zugreifen kann.

9. System nach einem der vorhergehenden Ansprüche, wobei der erzeugte UI-Build mindestens eine auf dem simulierten UI-Layout basierende containerisierte Anwendung (134) beinhaltet.

10. System nach Anspruch 7, wobei der Endbenutzer auf die mindestens eine cloudbasierte Webanwendung zugreifen kann, und wobei der Endbenutzer, über mindestens eine mobile Kommunikationsvorrichtung (204) in drahtloser Kommunikation mit der mindestens einen Zielvorrichtung, den erzeugten UI-Build herunterladen und ausführen kann.

11. System nach Anspruch 7, wobei das Empfangen der mindestens einen Layout-Anpassung des simulierten UI-Layouts Folgendes beinhaltet
mindestens eine Anforderung zum Neuanordnen der Anordnung des einen oder der mehreren ausgewählten Vorrichtungsmerkmale,
und/oder
mindestens ein Branding-Element, das durch den Endbenutzer zur Integration durch die cloudbasierte Webanwendung in das simulierte UI-Layout bereitgestellt wird.

## Revendications

1. Procédé (500) de simulation d'une interface d'utilisateur (UI) personnalisable pour un dispositif de commande de puissance, le procédé comprenant :
la fourniture (502) d'une application web en nuage à au moins un utilisateur final ;
la réception (504) en provenance de l'utilisateur final, par l'intermédiaire de l'application web en nuage, d'une sélection de type de dispositif associée à au moins un dispositif cible d'une pluralité de dispositifs de commande de puissance, le ou les dispositifs cibles comprenant au moins un contrôleur d'alimentation, un contrôleur de convertisseur de puissance, un contrôleur de redresseur de puissance, ou un contrôleur de surveillance thermique ;
la réception (506) en provenance de l'utilisateur final, par l'intermédiaire de l'application web en nuage, d'une désignation de région associée à une ou plusieurs contraintes de dispositif ;
la réception (508) en provenance de l'utilisateur final, par l'intermédiaire de l'application en nuage et sur la base de la sélection de type de dispositif et de la ou des contraintes de dispositif, d'une ou de plusieurs caractéristiques de dispositif, chaque caractéristique de dispositif étant configurée pour surveiller au moins un aspect du ou des dispositifs cibles ;
la génération (510), sur la base d'un code d'application associé au type de dispositif et de données de sélection et de configuration associées à au moins un format d'affichage de données, d'une disposition d'interface d'utilisateur, UI, simulée correspondant au(x) dispositif(s) cible(s) et comprenant un agencement de la ou des caractéristiques de dispositif, et un ou plusieurs paramètres opérationnels du ou des dispositifs cibles qui sont observables et réglables par l'utilisateur final par l'intermédiaire de la disposition d'UI simulée ;
la présentation (512) à l'utilisateur final, par l'intermédiaire de l'application web en nuage, de la disposition d'UI simulée ;
la génération (516) d'une construction d'UI basée sur la disposition d'UI simulée, la construction d'UI générée étant configurée pour être exécutée sur le dispositif cible ; et
la fourniture (518), par l'intermédiaire de l'application web en nuage, de la construction d'UI générée pour téléchargement par l'utilisateur final.

2. Procédé selon la revendication 1, comprenant en outre :
le stockage (514), par l'intermédiaire d'un stockage de données en nuage accessible à l'utilisateur final, de la disposition d'UI simulée.

3. Procédé selon la revendication 1 ou 2, la génération d'une construction d'UI basée sur la disposition d'UI simulée comprenant :
la génération d'au moins une application conteneurisée basée sur la disposition d'UI simulée.

4. Procédé selon l'une quelconque des revendications précédentes, la fourniture, par l'intermédiaire de l'application web en nuage, de la construction d'UI générée pour téléchargement par l'utilisateur final comprenant :
la fourniture de la construction d'UI générée pour téléchargement par l'utilisateur final à au moins un dispositif de communications mobiles en communication sans fil avec le ou les dispositifs cibles.

5. Procédé selon l'une quelconque des revendications précédentes, comprenant en outre :
la réception (520) en provenance de l'utilisateur final, par l'intermédiaire de l'application web en nuage, d'au moins une personnalisation de disposition de la disposition d'UI simulée ;
et
la révision (522) de la disposition d'UI simulée sur la base de la ou des personnalisations de disposition reçues.

6. Procédé selon la revendication 5, la réception en provenance de l'utilisateur final, par l'intermédiaire de l'application web en nuage, d'au moins une personnalisation de disposition de la disposition d'UI simulée comprenant :
la réception d'au moins une demande de réagencement de l'agencement de la ou des caractéristiques de dispositif, et/ou
la réception en provenance de l'utilisateur final d'au moins un élément de marque destiné à être incorporé dans la disposition d'UI simulée.

7. Système (100) de simulation d'une interface d'utilisateur, UI, personnalisable, pour un dispositif de commande de puissance, le système comprenant :
un ou plusieurs éléments (104) de mémoire configurés pour stocker :
une ou plusieurs configurations régionales (106) ;
un ou plusieurs modèles (108) d'application associés à une pluralité de dispositifs de commande de puissance ;
une ou plusieurs contraintes régionales associées à la pluralité de dispositifs de commande de puissance ; et
des données (110) de configuration associées à un ou plusieurs formats d'affichage de données ;
un ou plusieurs processeurs ;
et
au moins une application web en nuage exécutable par le ou les processeurs, l'application ou les applications web en nuage étant configurées pour :
recevoir, en provenance d'un utilisateur final :
une sélection (116) de type de dispositif correspondant à un dispositif cible (210) de la pluralité de dispositifs de commande de puissance, le dispositif cible comprenant au moins un contrôleur (120) d'alimentation,
un contrôleur (126) de convertisseur de puissance, un contrôleur (122) de redresseur de puissance, ou un contrôleur (124) de surveillance thermique ;
une désignation de région associée au dispositif cible ; et
une ou plusieurs caractéristiques (202) de dispositif sélectionnées sur la base de la sélection de type de dispositif et de la désignation de région, chaque caractéristique de dispositif sélectionnée étant configurée pour surveiller au moins un aspect du dispositif cible ;
générer, sur la base d'au moins un modèle d'application et de données de configuration correspondant à la sélection du type de dispositif, une disposition (400) d'interface d'utilisateur, UI, simulée comprenant un agencement de la ou des caractéristiques de dispositif sélectionnées, et un ou plusieurs paramètres opérationnels du dispositif cible qui sont observables et réglables par l'utilisateur final par l'intermédiaire de la disposition d'UI simulée ;
présenter la disposition d'UI simulée à l'utilisateur final ;
recevoir de l'utilisateur final au moins une personnalisation de disposition de la disposition d'UI simulée ;
et
réviser la disposition d'UI simulée sur la base de la ou des personnalisations de disposition,
l'application ou les applications web en nuage étant configurées pour :
générer une construction (208) d'UI sur la base de la disposition d'UI simulée, la construction d'UI générée étant configurée pour être exécutée sur le dispositif cible ; et
fournir, par l'intermédiaire de l'application web en nuage, la construction d'UI générée pour téléchargement par l'utilisateur final.

8. Système selon la revendication 7, l'application ou les applications web en nuage étant configurées pour stocker la disposition (304) d'UI simulée dans un stockage (112) en nuage accessible à l'utilisateur final.

9. Système selon l'une quelconque des revendications précédentes, la construction d'UI générée comprenant au moins une application conteneurisée (134) basée sur la disposition d'UI simulée.

10. Système selon la revendication 7, l'application ou les applications web en nuage étant accessibles à l'utilisateur final, et la construction d'UI générée étant téléchargeable et exécutable par l'utilisateur final, par l'intermédiaire d'au moins un dispositif (204) de communications mobiles en communication sans fil avec le ou les dispositifs cibles.

11. Système selon la revendication 7, la réception de la ou des personnalisations de disposition de la disposition d'UI simulée incluant
au moins une demande de réagencement de l'agencement de la ou des caractéristiques de dispositif sélectionnées, et/ou
au moins un élément de marque fourni par l'utilisateur final en vue de son incorporation par l'application web en nuage dans la disposition d'UI simulée.
